(19) Europäisches Patentamt
European Patent Office
Office européen des brevets

(11) **EP 2 120 068 B1**

(12) **FASCICULE DE BREVET EUROPEEN**

(45) Date de publication et mention
de la délivrance du brevet:
**24.03.2010 Bulletin 2010/12**

(51) Int Cl.:
***G01V 11/00*** *(2006.01)*        ***E21B 49/00*** *(2006.01)*

(21) Numéro de dépôt: **09159706.2**

(22) Date de dépôt: **07.05.2009**

(54) **Procédé d'estimation de paramètres physiques d'une formation géologique**

Abschätzverfahren der physischen Parameter einer geologischen Formation

Method for estimating the physical parameters of a geological formation

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **16.05.2008 FR 0853208**

(43) Date de publication de la demande:
**18.11.2009 Bulletin 2009/47**

(73) Titulaire: **Total S.A.**
**92400 Courbevoie (FR)**

(72) Inventeurs:
• **Jacques, Antoine**
**64000 Pau (FR)**

• **Boutaud de la Combe, Jean-Luc**
**64000 Pau (FR)**
• **Berest, Pierre**
**91128 Palaiseau Cédex (FR)**
• **Brouard, Benoît**
**75003 Paris (FR)**

(74) Mandataire: **Cabinet Plasseraud**
**52, rue de la Victoire**
**75440 Paris Cedex 09 (FR)**

(56) Documents cités:
**FR-A- 2 747 470        US-A- 2 972 050
US-A- 4 720 995        US-A- 5 269 180
US-A1- 2003 094 040**

## Description

La présente invention est relative à la détermination de paramètres physiques de couches de matériaux dans le sous-sol.

L'objet du procédé est de rechercher des propriétés telles que la perméabilité, la porosité ou la pression naturelle, des couches de matériaux dans le sous-sol. La connaissance de telles propriétés est notamment utile si une exploitation du sous-sol est envisagée, par exemple pour en extraire des hydrocarbures.

Le document FR-A-2 747 470 décrit un procédé d'essai d'étanchéité d'une cavité souterraine de stockage de fluide. Selon ce procédé, on remplit avec deux fluides non miscibles la cavité et un puits qui lui donne accès depuis la surface, l'interface entre les deux fluides étant positionnée à une profondeur souhaitée. Pour simuler une fuite à cette profondeur, on injecte ou on soutire des quantités prédéterminées de l'un des deux fluides. Les pressions en tête de puits sont mesurées, ainsi que la position de l'interface avant et après chaque injection ou soutirage. Le débit de fuite est alors estimé à partir de ces mesures.

Un tel procédé permet de qualifier l'étanchéité de la cavité en estimant un débit de fuite au sabot de cuvelage du puits. Ce procédé ne permet pas d'estimer la position de la fuite, ni d'estimer des paramètres physiques des matériaux environnants du puits à une profondeur donnée. En outre, ce procédé ne permet pas d'obtenir des paramètres physiques de plusieurs couches de matériaux dans le puits.

La présente invention vise à mesurer des paramètres physiques du sous-sol en étant moins soumis à de telles limitations.

Selon l'invention, il est proposé un procédé d'estimation de paramètres physiques d'une formation géologique, lesdits paramètres physiques étant choisis parmi la perméabilité, la porosité et la pression naturelle d'au moins une couche de la formation géologique, et comprenant les étapes suivantes:

- équiper un puits traversant la formation géologique d'un tube ouvert à son extrémité inférieure;
- remplir le tube et une partie inférieure d'un espace annulaire situé autour du tube dans le puits avec un premier fluide;
- remplir le reste de l'espace annulaire avec au moins un deuxième fluide de façon que les fluides présentent une interface dans l'espace annulaire;
- perturber un équilibre hydraulique des fluides dans le puits;
- mesurer l'évolution de grandeurs relatives à des propriétés des fluides dans le puits, lesdites grandeurs comprenant au moins une pression à l'intérieur du tube et une pression dans l'espace annulaire ;
- effectuer des simulations par ordinateur du comportement hydraulique des fluides ayant un équilibre perturbé dans le puits, chaque simulation utilisant un jeu de valeurs pour lesdits paramètres physiques de la formation géologique et donnant lieu à une évolution simulée desdites grandeurs; et
- comparer les évolutions mesurées et simulées desdites grandeurs pour identifier un jeu de valeurs optimal pour les paramètres physiques de la formation géologique.

Le puits et son environnement sont soumis à des séquences au cours desquelles sont faites des mesures et sont provoquées des perturbations de l'équilibre hydraulique, dans des conditions où les fluides contenus dans le puits sont soumis à des surpressions ou des dépressions et de ce fait s'échappent en partie dans les couches rocheuses environnantes. Des grandeurs telles que la pression dans ou en dehors du tube ou le niveau de l'interface entre les fluides sont mesurées dans leur évolution dynamique.

L'écoulement des fluides vers la formation géologique est par ailleurs simulé à l'aide d'un modèle, par exemple un modèle analytique ou par éléments finis, tenant compte des propriétés des matériaux du sous-sol, notamment perméabilité et/ou porosité. La comparaison des mesures aux prévisions du modèle permet une estimation des paramètres recherchés à l'aide de méthodes d'optimisation telles qu'on les utilise couramment dans l'analyse de données.

Il est ainsi possible de remonter à des estimations de paramètres physiques de la formation géologique traversée par le puits, du fait que l'évolution qui est mesurée et simulée se rapporte à plusieurs séquences de mesures successives dont les effets se cumulent dans le temps.

Dans des formes de réalisation du procédé selon l'invention, on peut éventuellement avoir recours en outre à l'une et/ou à l'autre des dispositions suivantes :

- l'interface est successivement positionnée à différentes profondeurs en ajustant les quantités des premier et second fluides dans le puits, et pour chaque profondeur on perturbe l'équilibre des fluides et on mesure l'évolution des grandeurs ;
- l'interface est déplacée entre au moins deux profondeurs en ajustant les quantités des premier et second fluides dans le puits, et pendant le déplacement de l'interface on perturbe l'équilibre des fluides et on mesure l'évolution des grandeurs ;
- l'évolution des grandeurs relatives à des propriétés des fluides est mesurée pendant un déplacement de l'interface entre au moins deux profondeurs prédéterminées en ajustant les quantités des premier et second fluides dans le puits ;

- l'équilibre hydraulique du puits est perturbé en injectant ou soutirant un volume prédéterminé de fluide dans le tube et/ou dans l'espace annulaire ;

- chaque simulation comporte une estimation des débits de perméation des fluides vers la formation géologique, puis une estimation de l'évolution simulée des grandeurs relatives à des propriétés des fluides dans le puits ;

- chaque simulation comporte en outre une estimation de la profondeur de l'interface dans l'espace annulaire à partir des débits de perméation estimés ;

- les premier et deuxième fluides sont des liquides ;

- le premier fluide est plus dense que le deuxième fluide ;

- les grandeurs relatives à des propriétés des fluides dans le puits comprennent la profondeur de l'interface le long de l'espace annulaire ;

- les grandeurs relatives à des propriétés des fluides dans le puits comprennent un débit d'injection ou de soutirage de fluide en tête de puits ;

- le puits est équipé en outre d'un asservissement d'une des grandeurs relative à des propriétés de fluides ;

- on exécute successivement des séquences de mesure, chaque séquence de mesure comprenant:

  • positionnement de l'interface à une profondeur déterminée pour la séquence en ajustant les quantités des premier et second fluides dans le puits,

  • perturbation d'un équilibre hydraulique des fluides dans le puits en injectant ou soutirant un volume prédéterminé de fluide dans le tube et/ou dans l'espace annulaire.

- les pressions sont mesurées en tête de puits ;

- l'une des pressions est considérée comme une pression de référence, et dans lequel chaque séquence de mesure comprend au moins les étapes suivantes :

  (a1) déplacer l'interface dans le puits jusqu'à une position prédéterminée,
  (a2) perturber un équilibre des fluides du puits en injectant un premier volume de fluide, la pression de référence variant d'une valeur de pression initiale à une valeur de pression finale,
  (a3) observer les variations des pressions, et
  (a4) ramener à l'équilibre les fluides du puits en soutirant un deuxième volume de fluide, la pression de référence variant jusqu'à sensiblement la valeur de pression initiale ;

- à l'étape (a1), l'interface est positionnée à une profondeur différente d'une séquence de mesure à une autre ;

- la formation géologique comporte plusieurs couches traversées par le puits, et dans lequel à l'étape (a1), l'interface est positionnée en regard d'une couche de matériaux différente d'une séquence de mesure à une autre.

D'autres caractéristiques et avantages de l'invention apparaîtront au cours de la description suivante de plusieurs de ses formes de réalisation, données à titre d'exemples non limitatif, en regard des dessins joints.

Sur les dessins :

- la figure 1 est une vue en coupe d'un puits dans lequel est appliqué le procédé du type de l'invention,

- la figure 2a montre un graphique représentant l'évolution d'une pression dans le puits en fonction du temps, pendant l'exécution d'une première forme de réalisation du procédé,

- la figure 2b montre un graphique représentant l'évolution de la profondeur de l'interface dans le puits en fonction du temps, pendant la même exécution de la figure 2a du procédé,

- la figure 3 est une vue en coupe agrandie d'une portion du puits de la figure 1 montrant une couche de matériaux, et des paramètres correspondants à un modèle mathématique hydraulique de ladite couche de matériaux,

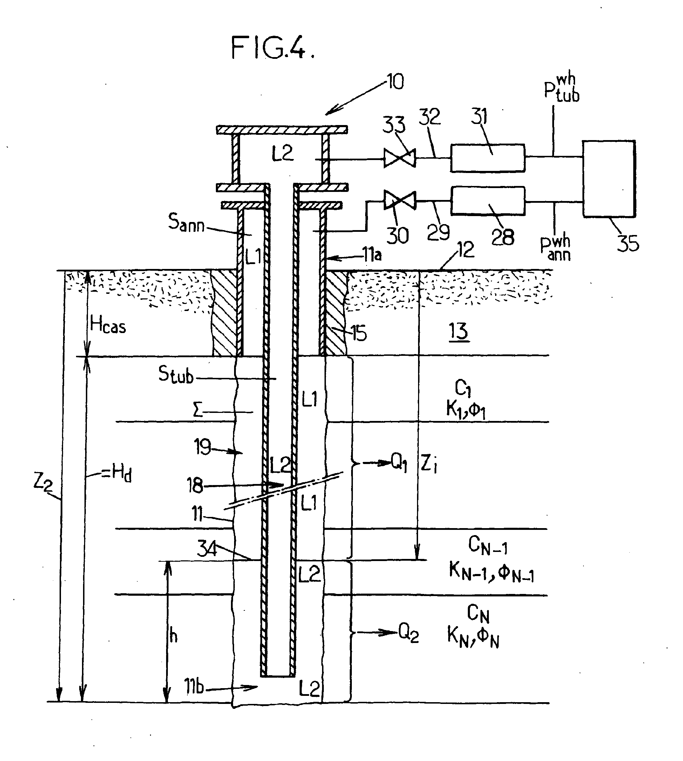

- la figure 4 est une vue en coupe d'un puits similaire à la figure 1, montrant d'autres paramètres d'un modèle mathématique hydraulique du puits,

- la figure 5a montre un graphique représentant l'évolution d'une pression dans le puits en fonction du temps, pendant l'exécution d'une deuxième forme de réalisation du procédé,

- la figure 5b montre un graphique représentant l'évolution d'un débit d'alimentation du puits en fonction du temps, pendant la même exécution de la figure 5a du procédé,

- la figure 5c montre un graphique représentant l'évolution de la profondeur de l'interface dans le puits en fonction du temps, pendant la même exécution de la figure 5a du procédé. Sur les différentes figures, les mêmes références désignent des éléments identiques ou similaires.

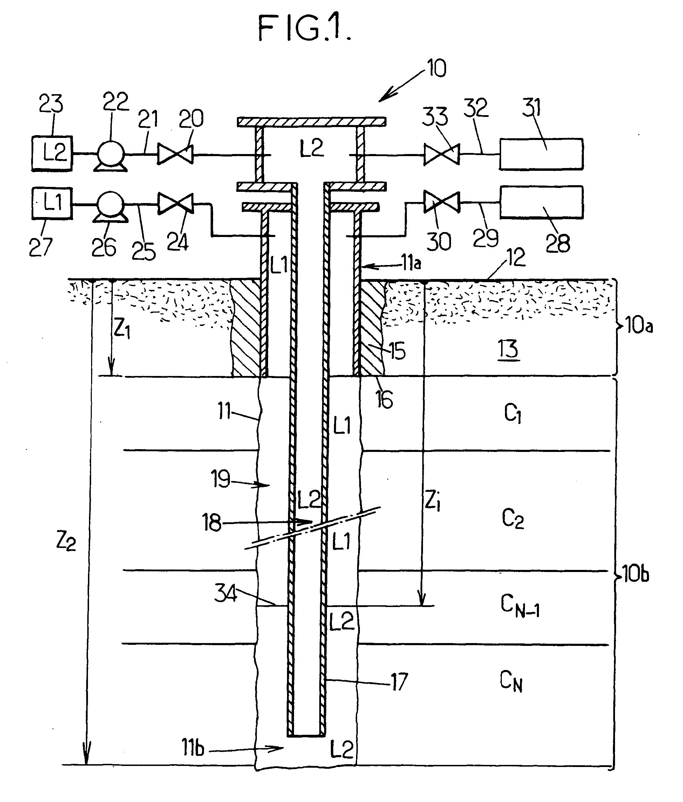

La figure 1 montre un puits 10 formé par un trou de forage 11 entre une tête de puits 11a à proximité de la surface du sol 12 et un fond de puits 11b. Le trou de forage 11 est représenté en figure 1 sensiblement vertical, mais celui-ci peut aussi être incliné, dans le cas de puits déviés.

Un cuvelage cimenté 15 comportant un tube métallique interne constitue le revêtement interne d'une partie supérieure 10a du puits 10, entre la tête de puits 11a et une zone de fin de cuvelage 16, souvent appelée sabot. Ce cuvelage 15 est sensiblement étanche aux divers fluides ou liquides pouvant circuler dans le puits de forage 10. Le sabot 16 se situe à une profondeur $z_1$ de la surface du sol 12.

Sous le sabot 16, le puits 10 se prolonge dans une zone 10b, souvent appelée découvert, jusqu'au fond de puits 11b. Dans ce découvert, le trou de forage 11 traverse une formation géologique 13 qu'on considère composée d'une succession de N couches de matériaux notées $C_1$, $C_2$ à $C_{N-1}$, puis $C_N$. Ces couches de matériaux sont généralement des roches sensiblement homogènes dans leur composition minéralogique, pour les profondeurs considérées, c'est-à-dire supérieures à quelques centaines de mètres, par exemple supérieures à 500 m. La première couche $C_1$ est située sous le cuvelage 15 et adjacente à celui-ci. La couche $C_N$ est située à proximité du fond de puits 11b. Ces couches de matériaux sont représentées horizontales autour du trou de forage 11, mais leur disposition peut bien entendu être autre.

Chaque couche Ci est délimitée par une surface supérieure et une surface inférieure. La surface inférieure d'une couche Ci correspond à la surface supérieure de la couche suivante $C_{i+1}$.

Dans l'exécution du procédé, les positions des surfaces entre les couches $C_1$-$C_N$ peuvent avoir été déterminées par des techniques connues d'imagerie du sous-sol, notamment par des techniques sismiques mises en oeuvre avant le forage du puits 10 ou par des techniques diagraphiques mises en oeuvre pendant le forage du puits 10. Ces techniques permettent d'être informé de la géométrie des couches constituant le sous-sol. Le procédé décrit ici sert ensuite à se renseigner sur le comportement hydraulique des roches ou matériaux constituant ces couches. En particulier, le procédé fournira des estimations de différents paramètres physiques des matériaux constituant les couches. Le procédé selon l'invention s'accommode d'un nombre N de couches qui peut aller de 1 à plusieurs dizaines.

Chaque couche Ci peut être caractérisée par des paramètres physiques tels que perméabilité, porosité ou une pression naturelle. La présente invention vise à déterminer au moins un de ces paramètres physiques. Un effet de peau, ou "skin" au voisinage du trou de forage 11 peut être pris en compte, comme décrit plus loin, afin de tenir compte d'une possible modification de certaines propriétés des roches au voisinage du forage à la suite d'opérations conduites dans le forage du puits 10.

La surface inférieure de la dernière couche $C_N$ peut être considérée comme située au fond de puits 11b, qui se situe à une profondeur $z_2$ de la surface du sol 12.

Un tube 17 est disposé dans le puits 10 depuis la tête de puits 11a sensiblement jusqu'au fond de puits 11b. Un espace cylindrique 18 est défini à l'intérieur du tube 17. Un espace annulaire 19 est défini entre la paroi du puits 10 et le tube 17.

L'espace annulaire 19 communique en tête de puits 11a avec une vanne 24, une ligne 25 et une pompe 26 avec un réservoir 27 contenant un fluide $L_1$. Le fluide $L_1$ occupe l'espace annulaire 19 de la tête de puits 11a jusqu'à un niveau d'interface situé à une profondeur $z_i$ de la surface du sol 12.

Le fluide $L_1$ est par exemple un liquide léger, par exemple un hydrocarbure léger ou de l'eau douce.

L'espace cylindrique 18 intérieur au tube 17 communique en tête de puits 11a avec une vanne 20, une ligne 21 et une pompe 22 avec un réservoir 23 contenant un fluide $L_2$. Le fluide $L_2$ occupe l'espace cylindrique 18 de la tête de puits 11a jusqu'au fond de puits 11b, ainsi que l'espace annulaire 19 du fond de puits 11b jusqu'au niveau d'interface à la profondeur $z_i$.

Le fluide $L_2$ est par exemple un liquide lourd, par exemple une boue.

Le procédé utilisera avantageusement deux liquides $L_1$, $L_2$, sans que cela soit limitatif.

A la profondeur $z_i$, une interface 34 sépare les deux liquides $L_1$, $L_2$. Ces liquides $L_1$, $L_2$ sont avantageusement non miscibles, de sorte qu'il existe une interface nette 34 entre eux.

En tête de puits 11a, un premier capteur de pression 28 est relié par une ligne 29 et une vanne 30 avec l'espace annulaire 19 rempli en partie supérieure du liquide $L_1$. Le capteur 28 permet donc la mesure en tête de puits de la pression $P_{ann}^{wh}$ dans l'espace annulaire 19.

De façon similaire, un deuxième capteur de pression 31 est relié par une ligne 32 et une vanne 33 avec l'espace cylindrique interne 18 rempli du liquide $L_2$. Le capteur 31 permet donc la mesure en tête de puits de la pression $P_{tub}^{wh}$ dans le tube 17.

Ces deux capteurs de pression en tête de puits 11a forment un exemple d'instrumentation du puits 10 pour obtenir des grandeurs mesurées dans le puits 10, mais d'autres possibilités sont envisageables.

Par exemple, une alternative de l'instrumentation proposée comprend :

- un premier capteur de pression installé sur la surface externe du tube 17 sensiblement en regard de la zone de fin de cuvelage 16, c'est-à-dire à la profondeur $z_1$,
- un deuxième capteur de pression installé sur la surface externe du tube 17 à l'extrémité inférieure du tube, c'est-à-dire approximativement à la profondeur $z_2$.

Dans ce cas, les deux capteurs de pression sont donc dans l'espace annulaire 19 du puits 10, le premier capteur mesurant une pression du liquide $L_1$ et le deuxième capteur mesurant une pression du liquide $L_2$.

Une autre alternative d'instrumentation du puits 10 comprend un capteur de position du niveau d'interface 34, ou des capteurs de débit dans l'espace annulaire 19 et/ou dans l'espace cylindrique interne 18.

Dans la suite de cette description, on fera référence à des capteurs de pression 28, 31 en tête de puits 11a tels que représentés en figure 1. On comprendra que toute autre instrumentation, et notamment une de celles évoquées ci-dessus pourrait être utilisée pour mettre en oeuvre le procédé de l'invention.

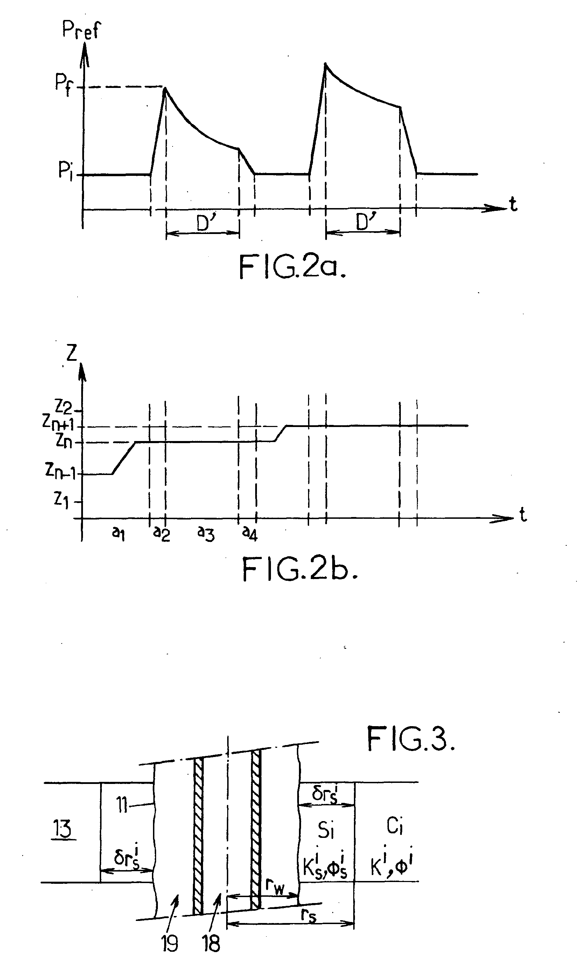

Les figures 2a et 2b présentent, dans un mode de réalisation où l'une des pressions $P_{tub}^{wh}$ ou $P_{ann}^{wh}$ est considérée comme une pression de référence $P_{ref}$, les évolutions de cette pression de référence $P_{ref}$ en fonction du temps, et de la profondeur $z_i$ de l'interface 34, en correspondance.

Cette séquence comprend les étapes successives (a1)-(a4), représentées temporellement entre des traits pointillés verticaux des figures 2a et 2b.

A l'étape (a1), on déplace le niveau d'interface 34 dans le puits 10 d'une profondeur $z_{n-1}$ jusqu'à une profondeur $z_n$ comprise entre $z_1$ et $z_2$.

Cette étape (a1) est réalisée :

- soit en injectant un volume de déplacement $V_d$ du liquide $L_1$ par la pompe 26, la ligne 25 et la vanne 24 et en soutirant simultanément un volume identique du liquide $L_2$ par la pompe 22, la ligne 21 et la vanne 20. Dans ce premier cas, l'interface 34 est déplacée en direction du fond du puits 11b;
- soit en soutirant un volume de déplacement $V_d$ du liquide $L_1$ par la pompe 26, la ligne 25 et la vanne 24 et en injectant simultanément un volume identique du liquide $L_2$ par la pompe 22, la ligne 21 et la vanne 20. Dans ce second cas, l'interface 34 est déplacée en direction de la tête du puits 11a.

Le volume de déplacement $V_d$ peut être déterminé à l'aide d'une section moyenne $S_{ann}$ de l'espace annulaire 19.

L'étape (a1) est conduite avec une pression de référence maintenue à une valeur initiale $P_i$ très faible ou nulle, et peut être contrôlée par la variation de l'autre pression. Le puits est sensiblement en équilibre. Il y a donc circulation des liquides dans les espaces 18-19.

A l'étape (a2), on perturbe l'équilibre hydraulique des liquides du puits en injectant ou soutirant un volume $V_1$ de liquide, la pression de référence variant de la valeur initiale $P_i$ à une valeur finale $P_f$, comme cela est présenté en figure 2a.

Le volume $V_1$ est faible relativement au volume total du puits, de l'ordre de quelques litres, par exemple inférieur à 100 litres, et ce volume est injecté en une durée courte de l'ordre de quelques secondes, par exemple inférieure à 60 secondes.

L'étape (a2) peut consister à injecter ou soutirer soit un volume prédéterminé $V_1$ du liquide $L_1$ dans l'espace annulaire 19 par l'intermédiaire de la pompe 26, la ligne 25 et la vanne 24, soit un volume prédéterminé $V_1$ du liquide $L_2$ dans l'espace cylindrique 18 par l'intermédiaire de la pompe 22, de la ligne 21 et de la vanne 20.

Suite à cette injection ou soutirage, la pression dans le puits 10 est modifiée et l'équilibre hydraulique est perturbé. Les liquides $L_1$, $L_2$ commencent alors à pénétrer ou à être extrait des couches de la formation géologique 13.

La figure 2a présente le cas d'une injection. Dans ce cas, la pression dans le puits augmente pendant l'étape (a2)

A l'étape (a3), on observe les variations des pressions $P_{tub}^{wh}$ et $P_{ann}^{wh}$, pendant une durée D' alors que les liquides $L_1$, $L_2$ pénètrent ou sont extraits des couches de la formation géologique 13.

La durée D' peut être inférieure à 1 heure, et parfois inférieure à 10 minutes. Elle est choisie en fonction des caractéristiques des liquides $L_1$, $L_2$ et/ou de l'ordre de grandeur des paramètres physiques des couches $C_1$-$C_N$.

Cette durée D' peut être différente pour chaque séquence d'essai du procédé. La figure 2a présente deux séquences : une première étape (a3) d'une durée D' et une seconde étape (a3) d'une durée D".

Les pressions reviennent en direction de l'équilibre hydraulique des liquides dans le puits 10.

Dans le cas de la figure 2a, ces pressions diminuent.

La variation des pressions observée est représentative des caractéristiques de l'ensemble des couches de matériaux et de l'historique des itérations des séquences de mesure. En conséquence, ces évolutions des pressions sont complexes. L'observation d'une seule itération ne permet pas d'obtenir de manière suffisamment précise les paramètres physiques d'une couche de matériaux en particulier.

La profondeur $z_i$ de l'interface 34 évolue également pendant cette étape (a3), mais le volume $V_1$ étant faible, cette évolution n'est pas visible sur la figure 2b.

A l'étape (a4), on remet en équilibre les liquides du puits en soutirant ou injectant un volume $V_2$ de liquide, inversement à l'étape (a2), la pression de référence $P_{ref}$ revenant sensiblement à la valeur initiale $P_i$.

Laisser le système revenir naturellement à l'équilibre suite à la perturbation de l'étape (a2) peut être long, par exemple plus de 1 heure, ou même plus de 4 heures. Il est préférable de forcer ce retour à l'équilibre par l'étape (a4) du procédé afin de raccourcir la durée D' de l'étape (a3).

Ensuite, on réitère la séquence des étapes (a1) à (a4) un certain nombre de fois, deux itérations étant illustrées par la figure 2a-b. Cette répétition de la séquence (a1)-(a4) permet d'acquérir une grande quantité de mesures qui pourront ensuite être analysées pour estimer des paramètres physiques des couches $C_1$-$C_N$.

Avantageusement, l'interface 34 est positionnée à chaque itération à une profondeur $z_{n+1}$ différente des profondeurs $z_n$ des itérations précédentes. En particulier, par un choix approprié des volumes de déplacement $V_d$ aux étapes (a1) successives, on peut positionner l'interface 34 au niveau d'une couche Ci différente à chaque itération.

Un modèle mathématique permet de simuler avec un jeu de paramètres le comportement hydraulique du puits 10, de façon à produire des grandeurs calculées dont l'évolution dynamique peut être rapprochée de celle des grandeurs mesurées. Dans l'exemple présenté, on calcule les pressions $P_{ann}^{wh}$ et $P_{tub}^{wh}$.

Le modèle mathématique utilise des valeurs supposées connues, telles que :

- des caractéristiques des liquides $L_1$, $L_2$ utilisés, comme leurs densités $\rho_1$, $\rho_2$, leurs viscosités dynamiques $\mu_1$, $\mu_2$, ou leurs coefficients de compressibilité $\beta_1$, $\beta_2$,

- des caractéristiques du puits 10, telles que les profondeurs $z_1$ et $z_2$, la section moyenne $S_{ann}$ de l'espace annulaire 19 au droit du cuvelage 15, la section moyenne $\Sigma$ de l'espace annulaire 19 dans le découvert 10b, une section moyenne $S_{tub}$ de l'espace cylindrique interne 18,

Des enregistrements préalables, notamment des enregistrements sismiques ou diagraphiques peuvent permettre de connaitre a priori des caractéristiques de la formation géologique 13 dans laquelle le puits 10 est foré, telles que les profondeurs et épaisseurs des différentes couches de matériaux qui la composent. Ces informations sont cependant facultatives. Il est ainsi possible de définir dans le modèle mathématique, des couches ayant une épaisseur arbitraire, pouvant être très faible, par exemple de seulement 5 mètres.

Le modèle mathématique utilise également des paramètres inconnus, relatifs à chaque couche Ci de matériaux, et en particulier :

- une perméabilité $K^i$, et
- une porosité $\phi^i$.

La perméabilité des couches Ci de matériaux de la formation géologique 13 est souvent modifiée à proximité de la paroi du trou de forage 11. Le modèle peut ainsi être complété en utilisant la notion de peau, ou « skin ». Alors, comme représenté en figure 3, les paramètres de chaque couche Ci de matériaux comprennent, outre la perméabilité $K^i$ et la porosité $\phi^i$ :

- une épaisseur radiale $\delta r_s^i$ de « skin »,

- une perméabilité $K_s^i$ dans le « skin »,

- une porosité $\phi_s^i$ dans le « skin »..

En variante, le « skin » peut être modélisé de manière simplifiée en utilisant un seul paramètre $\overline{S}^i$, dit de « skin », pour chaque couche Ci de matériaux, défini comme suit :

$$\overline{S} = \left(\frac{K}{K_s}\right).\mathrm{Log}\left(\frac{r_s}{r_w}\right)$$

où :

- K est la perméabilité au-delà du « skin »,
- $K_s$ est la perméabilité dans le « skin »,
- $r_w$ est le rayon du trou de forage 11,

- $r_s$ ( = $r_w + \delta r_s^i$ ) est le rayon extérieur du « skin ».

Dans une variante du modèle, chaque couche Ci de matériaux comprend un nombre M de zones radiales d'indices j, sous forme d'anneaux concentriques, chaque zone radiale ayant une épaisseur radiale $\delta r_j^i$ , une perméabilité $K_j^i$ et une porosité $\phi_j^i$ . Cependant, une telle variante augmente considérablement le nombre de paramètres à déterminer.

Dans tous les cas, le modèle mathématique du puits 10 est basé sur le calcul à chaque instant t de deux débits de perméation $Q_1$, $Q_2$ des liquides $L_1$, $L_2$ sur la hauteur du découvert.

Suite à une variation de la pression dans le puits après une injection ou un soutirage de liquide en tête de puits 11a, la pression revient en direction de sa valeur initiale correspondant à un état d'équilibre où les débits de perméation $Q_1$, $Q_2$ sont quasi-nuls.

Les deux débits de perméation sont liés aux vitesses des variations des pressions en tête de puits par la relation matricielle suivante :

$$\begin{bmatrix} Q_1 \\ Q_2 \end{bmatrix} = \begin{bmatrix} C & -D \\ -E & F \end{bmatrix} \begin{bmatrix} \dot{P}_{tub}^{wh} \\ \dot{P}_{ann}^{wh} \end{bmatrix}$$

où:

$$C = \frac{\Sigma.A}{\left(\rho_2^d - \rho_1^d\right)g} + \frac{\rho_1^{ann}}{\rho_1^d}.V_{ann}.\beta_{ann}^{ext} + \Sigma.(H_d - h).\beta_d^{ext}$$

$$D = \frac{\Sigma.B}{\left(\rho_2^d - \rho_1^d\right)g} + \frac{\rho_1^{ann}}{\rho_1^d}.V_{ann}.\left(\beta_1 + \beta_{ann}^{int}\right) + \Sigma.(H_d - h).\left(\beta_1 + \beta_d^{int}\right)$$

$$E = \frac{\Sigma.A}{\left(\rho_2^d - \rho_1^d\right)g} + \frac{\rho_2^{tub}}{\rho_2^d}.V_{tub}.\left(\beta_2 + \beta_{tub}^{int}\right) + \Sigma.h.(\beta_2 + \beta_d)$$

$$F = \frac{\Sigma.B}{\left(\rho_2^d - \rho_1^d\right)g} + \frac{\rho_2^{tub}}{\rho_2^d}.V_{tub}.\beta_{tub}^{ext}$$

$$A = 1 + \beta_2.g.\left(\rho_2^{tub}.H_{tub} - \rho_2^d.(h - H_{cas} - H_d - H_{tub})\right),$$

$$B = 1 + \beta_1 . g . \left( \rho_1^{ann} . H_{cas} - \rho_1^d . (H_d - h) \right).$$

et:

$\rho_1^d$ et $\rho_2^d$ sont les masses volumiques respectives des liquides $L_1$ et $L_2$ à la profondeur du découvert,

g est l'accélération de la pesanteur,

$\rho_1^{ann}$ est la masse volumique moyenne du liquide $L_1$ dans l'espace annulaire 19,

$\rho_2^{tub}$ est la masse volumique moyenne du liquide $L_2$ dans le tube 17,

$V_{ann}$ est le volume de l'espace annulaire 19 depuis le haut du puits 11a jusqu'au sabot 16,

$V_{tub}$ est le volume intérieur du tube 17 ($V_{tub} \approx S_{tub} . H_{tub}$),

$H_d$ est la hauteur du découvert 10b ($H_d \approx z_2 - z_1$),

h est la hauteur de l'interface 34 par rapport au fond du puits 11b ($h = z_2 - z_i$),

$\Sigma$ est la section moyenne de l'espace annulaire 19 au niveau du découvert 10b,

$\beta_1$ et $\beta_2$ sont les coefficients de compressibilité respectifs des liquides $L_1$ et $L_2$,

$\dot{P}_{tub}^{wh}$ et $\dot{P}_{ann}^{wh}$ sont les vitesses de variation de la pression en tête du tube 17 et de l'espace annulaire 19, respectivement,

$H_{cas}$ est la hauteur du cuvelage 15 ($H_{cas} \approx z_1$),

$H_{tub}$ est la hauteur du tube 17 ($H_{tub} = H_{cas} + H_d \approx z_2$),

$\beta_{ann}^{int}$, $\beta_{ann}^{ext}$, $\beta_{tub}^{int}$, $\beta_{tub}^{ext}$, $\beta_d^{int}$, $\beta_d^{ext}$ et $\beta_d$ sont des coefficients de compressibilité.

L'ensemble de ces derniers coefficients de compressibilités est calculé par les variations élastiques des sections de l'espace annulaire et interne, en fonction des pressions et peuvent s'exprimer en fonction des paramètres d'élasticité, module de Young E et coefficient de poisson v de l'acier du tube 17, du ciment du cuvelage 15 et de la roche de la formation géologique 13.

$\beta_{ann}^{int}$, $\beta_{ann}^{ext}$ sont des coefficients de compressibilité associés à l'espace annulaire.

$\beta_{tub}^{int}$, $\beta_{tub}^{ext}$ sont des coefficients de compressibilité associés au tube.

$\beta_d^{int}$, $\beta_d^{ext}$ sont des coefficients de compressibilité associés au découvert au dessus de l'interface.

$\beta_d$ est un coefficient de compressibilité associé au découvert au dessous de l'interface.

La prise en compte de ces coefficients de compressibilité est importante pour obtenir une précision suffisante de la simulation, notamment pour obtenir une précision inférieure à 10 %.

Des essais réels de compressibilité du puits 10 en le remplissant avec un seul fluide visqueux n'entrant pas dans la formation géologique 13 peuvent permettre d'effectuer des mesures pour vérifier les valeurs de coefficients de compressibilités calculées par les formules analytiques suivantes, issues des calculs de variations élastiques :

$$\beta_{ann}^{int} = \frac{2\pi}{S_{ann}} \left[ \lambda \left( r_{ann}^{int} \right)^2 + \frac{(1 + v_{tub})\left( r_{tub}^{ext} \right)^2}{E_{tub}} \frac{\left[ \tau_{tub}^2 - (1 - 2v_{tub}) \right]}{\left( 1 - \tau_{tub}^2 \right)} \right]$$

$$\beta_{ann}^{ext} = \frac{4\pi \left( 1 - v_{tub}^2 \right)\left( r_{tub}^{ext} \right)^2 \tau_{tub}^2}{S_{ann} E_{tub} \left( 1 - \tau_{tub}^2 \right)}$$

$$\beta_{tub}^{int} = \frac{2(1 + \nu_{tub})}{E_{tub}(1 - \tau_{tub}^2)} \left[ 1 + (1 - 2\nu_{tub})\tau_{tub}^2 \right]$$

$$\beta_{tub}^{ext} = \frac{4(1 - \nu_{tub}^2)}{E_{tub}}$$

$$\beta_d^{int} = \frac{\pi}{\Sigma} \left[ \frac{(1 + \nu_R^d)(r_d)^2}{2E_R^d} + \frac{2(1 + \nu_{tub})(r_{tub}^{ext})^2}{E_{tub}} \frac{[\tau_{tub}^2 - (1 - 2\nu_{tub})]}{(1 - \tau_{tub}^2)} \right]$$

$$\beta_d^{ext} = \frac{4\pi(1 - \nu_{tub}^2)(r_{tub}^{ext})^2 \tau_{tub}^2}{\Sigma E_{tub}(1 - \tau_{tub}^2)}$$

$$\beta_d = \frac{2(1 + \nu_R^d)}{E_R^d}$$

Avec

$$\tau_{tub} = r_{tub}^{int}/r_{tub}^{ext} ,$$

$r_{tub}^{int}$ et $r_{tub}^{ext}$ sont les rayons intérieur et extérieur du tube 17,

$r_{ann}^{int}$ est le rayon intérieur du cuvelage 15,

$r_d$ est le rayon du découvert 10b,

$E_{tub}$ et $V_{tub}$ sont les paramètres élastiques du matériau du tube 17, module de Young $E_{tub}$ et coefficient de poisson $V_{tub}$ du tube 17,

$E_R^d$ et $\nu_R^d$ sont les paramètres élastiques du matériau de la formation géologique 13 au niveau du découvert 10b, module de Young $E_R^d$ et coefficient de poisson $\nu_R^d$ du découvert 10b,

$$\lambda = \frac{E_R^d a_{12} + (1 + \nu_R^d) a_{22}}{E_R^d a_{11} + (1 + \nu_R^d) a_{21}} ,$$

$a_{ij}$ étant les composantes du produit de matrice $[A_c][A_1]$, la matrice $[A_c]$ faisant le lien entre le déplacement radial et la contrainte radiale dans le ciment autour du cuvelage 15, la matrice $[Al]$ faisant le lien entre le déplacement radial et la contrainte radiale dans le tube du cuvelage 15. Les relations élastiques dans des anneaux solides permettent d'établir la formule suivante, valable pour un anneau d'indice j :

$$[A_j] = \begin{bmatrix} \dfrac{1 - 2v_j + \tau_j^2}{2(1 - v_j)} & \dfrac{(1 + v_j)(1 - 2v_j)(1 - \tau_j^2)}{2E_j(1 - v_j)} \\[2ex] \dfrac{(1 - \tau_j^2)E_j}{2(1 - v_j^2)} & \dfrac{1 + (1 - 2v_j)\tau_j^2}{2(1 - v_j)} \end{bmatrix}$$

Avec

$$\tau_j = r_j^{int} / r_j^{ext} ,$$

$r_j^{int}$ et $r_j^{ext}$ sont les rayons intérieur et extérieur de l'anneau considéré,

$E_j$ et $V_j$ sont les paramètres élastiques du matériau de l'anneau considéré, module de Young $E_j$ et coefficient de poisson $V_j$ dudit anneau considéré.

Il est alors possible de calculer les vitesses de variation des pressions en tête de puits, $\dot{P}_{tub}^{wh}$ et $\dot{P}_{ann}^{wh}$, par inversion de l'équation matricielle précédente. C'est-à-dire :

$$\begin{bmatrix} \dot{P}_{tub}^{wh} \\ \dot{P}_{ann}^{wh} \end{bmatrix} = \frac{-1}{DE - CF} \begin{bmatrix} F & D \\ E & C \end{bmatrix} \begin{bmatrix} Q_1 \\ Q_2 \end{bmatrix} \tag{1}$$

Cette dernière équation est utilisée pour calculer les évolutions des pressions $P_{ann}^{wh}$ et $P_{tub}^{wh}$ en tête de puits 11a comme cela est explicité ci-dessous.

La vitesse de déplacement de la hauteur h de l'interface 34 est alors donnée par :

$$\dot{h} = \frac{1}{(\rho_2^d - \rho_1^d)g} . \left[ A \quad - B \begin{bmatrix} \dot{P}_{tub}^{wh} \\ \dot{P}_{ann}^{wh} \end{bmatrix} \right] = \frac{-1}{\kappa.(\rho_2^d - \rho_1^d)g} . \left[ \xi \quad \theta \begin{bmatrix} Q_1 \\ Q_2 \end{bmatrix} \right] \tag{2}$$

avec: $\kappa = DE - CF$, $\xi = AF - BE$ et $\theta = AD - BC$.

En outre, une fonction de débit de perméation par unité de hauteur peut être calculée à l'aide d'une équation de diffusion hydraulique dans la couche i, similaire à une équation de diffusion thermique, dite de Fourier, bien connue. Cette équation de diffusion hydraulique s'écrit :

$$\frac{\partial \psi^{hyd}}{\partial t} = k_R^{hyd} . \nabla^2 \psi^{hyd}$$

où $\psi^{hyd}$ est le potentiel hydraulique, c'est-à-dire $\psi^{hyd} = P - \rho g z$, P étant la pression à un niveau de référence (ici le niveau de la surface où sont mesurées les pressions $P_{ann}^{wh}$ et $P_{tub}^{wh}$), $\rho$ est la masse volumique moyenne du liquide considéré et z est la profondeur par rapport au niveau de référence,
g est l'accélération de la pesanteur,
$\nabla^2$ désigne le laplacien,

$k_R^{hyd}$ est la diffusivité hydraulique du milieu, c'est-à-dire $k_R^{hyd} = K_R^{hyd}.M / \mu_f$ ,

$K_R^{hyd}$ est la perméabilité du matériau,

M est le module de Biot du matériau,

$\mu_f$ est la viscosité dynamique du liquide f diffusant dans le matériau.

Cette équation de diffusion hydraulique admet, dans le cas d'une couche de matériau isotrope dans un plan horizontal autour d'un puits 10 de diamètre $2r_w$, modélisée en coordonnées polaires, une solution qui peut être exprimée par la fonction de débit par unité de hauteur suivante :

$$\Phi^{hyd} = \frac{2\pi.r_w.K_R^{hyd}}{\mu_f} . \left(\frac{\partial \psi^{hyd}}{\partial r}\right)_{r=r_w}$$

ou

$$\Phi^{hyd} = \frac{2\pi.K_R^{hyd}.\psi_0^{hyd}}{\mu_f} . f(\tau^{hyd}) \tag{3}$$

avec

$$f(\tau) = \frac{4}{\pi} \int_0^\infty \frac{e^{-ku^2\tau}}{u\left[J_0^2(u.r_w) + Y_0^2(u.r_w)\right]}$$

du

$$\psi_0^{hyd} = P_0 - P^\infty ,$$

$P^\infty$: pression de pore à distance infinie, c'est-à-dire la pression naturelle loin du forage du puits 10,

$P_0$: pression hydraulique constante dans le puits 10,

$J_0$ et $Y_0$: fonctions de Bessel de première et de deuxième espèce,

$$\tau^{hyd} = \frac{k_R^{hyd}.t}{r_w^2} = \frac{K_R^{hyd}.t}{\lambda_f} , \quad avec \quad \lambda_f = \frac{\mu_f.r_w^2}{M} \approx \mu_f.\beta_f.r_w^2.\phi$$

Les débits de perméation $Q_1$, $Q_2$ peuvent alors être calculés en intégrant sur la hauteur désirée la fonction de débit par unité de hauteur, en utilisant pour chaque tranche ou couche les paramètres adéquats des liquides et des matériaux.

Ainsi, grâce aux équations (1), (2) et (3), il est possible de calculer les variations des pressions $P_{ann}^{wh}$ , en tête de puits 11a, et l'évolution de la hauteur h de l'interface 34.

Ce calcul est effectué temporellement pas à pas, depuis l'instant initial de la perturbation, en découpant le temps t en petits intervalles de temps $\delta t$ pour lesquels une petite variation de pression est calculée. Il tient compte de l'évolution de la profondeur $z_i$ de l'interface 34 et des volumes des deux liquides $L_1$, $L_2$ entrant ou migrant dans les différentes couches de matériaux de la formation géologique 13.

Le débit de perméation $Q_1^{n+1}$ du premier liquide $L_1$ à la $(n+1)^{ième}$ itération du calcul s'exprime alors par :

$$Q_1^{n+1}(t) = \frac{2\pi}{\mu_1} \cdot \sum_{i=0}^{n} \left[ \Delta P_{ann}^i \cdot \int_{H_{cas}}^{H_{cas}+H_d-h_i} K_R^{hyd}(z) \cdot f\left( \frac{K_R^{hyd}(z) \cdot [t-i.\delta t]}{\lambda_1(z)} \right) . dz \right]$$

avec

$$\lambda_1(z) = \frac{\mu_1 \cdot r_d^2}{M(z)} \approx \mu_1 . \beta_1 . r_d^2 . \phi(z),$$

$h_i$: hauteur, par rapport au fond du puits de l'interface 34 au cours du $(n+1)^{ième}$ intervalle de temps du calcul,

$\Delta P_{ann}^i$ : variation de la pression en haut de l'espace annulaire 19 au cours du $i^{ième}$ intervalle de temps du calcul

( $\Delta P_{ann}^i = \dot{P}_{ann}^{wh} . \delta t$).

Ce débit de perméation $Q_1^{n+1}$ à la $(n+1)^{ième}$ itération du calcul résulte de l'intégrale sur la hauteur de l'espace annulaire 19 rempli du liquide $L_1$ , c'est-à-dire entre $H_{cas}$ et $H_{cas}+H_d$-h, d'une fonction de débit par unité de hauteur, et de la somme des débits des instants précédents, pour i = 0 à n. Il fait apparaître la perméabilité $K_R^{hyd}(z) = K^i$ du matériau à la profondeur z considérée ainsi que sa porosité $\phi(z)$.

Le volume du liquide $L_1$ migrant dans la formation géologique au cours du $(n+1)^{ième}$ intervalle de temps du calcul s'exprime par :

$$v_1^{n+1} = \int_{n.\delta t}^{(n+1).\delta t} Q_1^{n+1}(t).dt$$

Le débit de perméation $Q_2^{n+1}$ du liquide $L_2$ à la $(n+1)^{ième}$ itération du calcul s'exprime de manière similaire par :

$$Q_2^{n+1}(t) = \frac{2\pi}{\mu_2} \cdot \sum_{i=0}^{n} \left[ \Delta P_{tub}^i \cdot \int_{H_{cas}+H_d-h_i}^{H_{cas}+H_d} K_R^{hyd}(z) \cdot f\left( \frac{K_R^{hyd}(z) \cdot [t-i.\delta t]}{\lambda_2(z)} \right) . dz \right]$$

avec

$$\lambda_2(z) = \frac{\mu_2 \cdot r_d^2}{M(z)} \approx \mu_2 . \beta_2 . r_d^2 . \phi(z),$$

$\Delta P_{tub}^{i}$ : variation de la pression en haut de l'espace cylindrique au cours du $i^{ème}$ intervalle de temps du calcul ( $\Delta P_{tub}^{i} = \dot{P}_{tub}^{wh} . \delta t$ ).

Le volume du liquide $L_2$ migrant dans la formation géologique au cours du $(n+1)^{ème}$ intervalle de temps du calcul s'exprime par :

$$v_2^{n+1} = \int_{n.\delta t}^{(n+1).\delta t} Q_2^{n+1}(t).dt$$

Les variations des pressions $P_{ann}^{wh}$ et $P_{tub}^{wh}$ au cours du $(n+1)^{ème}$ intervalle de temps du calcul sont alors données par une version discrétisée de (1), où les composantes C, D, E, F de la matrice sont exprimées en fonction de la hauteur $h_n$ de l'interface à l'issue de la $n^{ème}$ itération du calcul :

$$\begin{bmatrix} \Delta P_{tub}^{n+1} \\ \Delta P_{ann}^{n+1} \end{bmatrix} = \frac{-1}{\kappa(h_n)} . \begin{bmatrix} F(h_n) & D(h_n) \\ E(h_n) & C(h_n) \end{bmatrix} \begin{bmatrix} v_1^{n+1} \\ v_2^{n+1} \end{bmatrix}$$

La variation de la hauteur h de l'interface 34 par rapport au fond du puits au cours du $(n+1)^{ème}$ intervalle de temps du calcul se déduit de (2) :

$$\Delta h_{n+1} = h_{n+1} - h_n = \frac{-1}{\kappa(h_n).(\rho_2^d - \rho_1^d)g} \begin{bmatrix} \xi(h_n) & \theta(h_n) \end{bmatrix} \begin{bmatrix} v_1^{n+1} \\ v_2^{n+1} \end{bmatrix}$$

Ces calculs sont effectués en prenant pour l'instant initial $\Delta P_{ann}^{0} \approx \Delta P_{tub}^{0}$ égal à la variation de pression mesurée au moment de la perturbation (hauteur du pic sur la figure 2a), et $h_0$ est la hauteur de l'interface 34.

Les formules précédentes montrent que le calcul est fortement couplé entre les variations de pression, les variations de hauteur h de l'interface, et les volumes des liquides $L_1$, $L_2$ pénétrant à chaque instant t dans les diverse couches $C_i$ de matériaux de la formation géologique 13.

Une fonction de coût $f_c$, ou fonction objectif, est définie pour évaluer les écarts entre les grandeurs calculées à l'aide du modèle mathématique et les mêmes grandeurs qui ont été mesurées. Cette fonction de coût est par exemple la somme des modules des différences entre les grandeurs calculées et mesurées, ou encore la somme des carrés de ces différences. Les grandeurs ainsi comparées sont typiquement les pressions $P_{ann}^{wh}$ , $P_{tub}^{wh}$ mesurées en tête de puits 11a par les capteurs 28 et 31.

Un algorithme de minimisation ou d'inversion permet de rechercher des valeurs de paramètres minimisant la fonction de coût.

La fonction de coût $f_c$ présente pour plusieurs jeux de paramètres un minimum local. Pour la résolution du problème inverse, un algorithme du type « Nelder-Mead » (Simplexe), ou du type génétique ou du type à réseau de neurones ou du type « particle swarm », peut avantageusement être utilisé.

L'algorithme de minimisation fait varier chaque paramètre du modèle dans une plage de variation de sorte à minimiser la fonction de coût $f_c$. Par exemple :

- la plage de variation des perméabilités $K^i$ peut être comprise entre $10^{-19}$ et $10^{-15}$ $m^2$,
- la plage de variation des porosités $\phi^i$ peut être comprise entre 0,01 et 20 %,
- la plage de variation du skin $\overline{S}^i$ peut être comprise entre 0 et 50, dans le cas d'un modèle simplifié de « skin ».

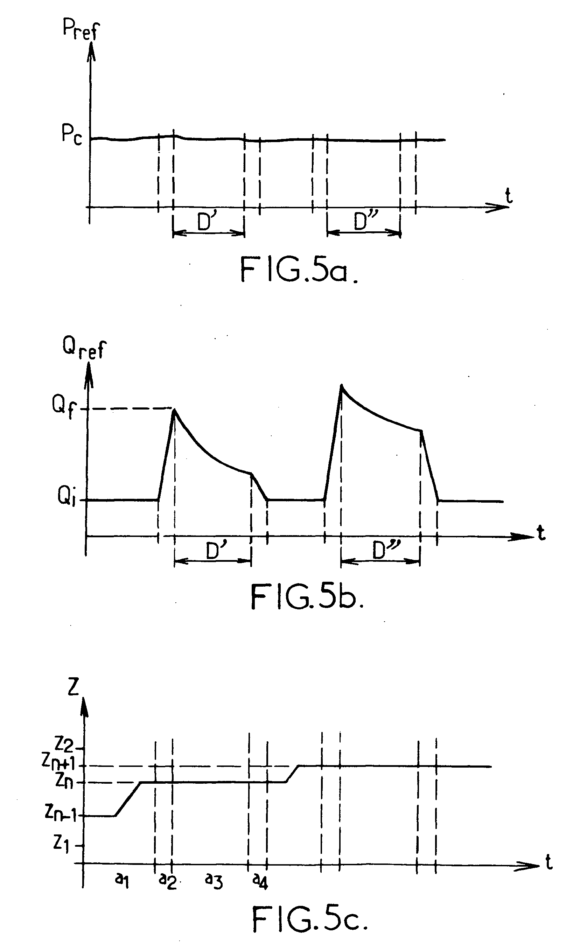

Les figures 5a à 5c présentent une deuxième forme de réalisation du procédé, dans lequel le puits est équipé d'un système d'asservissement d'une pression de référence $P_{ref}$, de telle sorte que ladite pression de référence est maintenue sensiblement constante à une valeur $P_c$ comme représenté en figure 5a.

Les lignes 21, 25 sont alors par exemple équipées chacune, d'un dispositif de mesure de débit pour mesurer à chaque instant les débits et/ou volumes des fluides injectés et soutirés en tête de puits.

Le système d'asservissement commande alors les pompes 22, 26 pour injecter ou soutirer automatiquement une certaine quantité de fluide pour maintenir ladite pression de référence $P_{ref}$ constante.

Des débits en tête puits $Q_{ann}^{wh}$ et $Q_{tub}^{wh}$ sont mesurés pendant les essais, la figure 5b montrant un exemple d'évolution d'un débit de référence $Q_{ref}$ pendant une séquence d'essai similaire à celle de la première forme de réalisation du procédé représentée par les figures 2a et 2b. Ces débits permettent d'estimer les débits de perméation $Q_1$ et $Q_2$ du liquide $L_1$ et $L_2$, respectivement, de manière similaire aux calculs présentés précédemment pour les pressions en tête de puits.

La figure 5c représente alors dans cette forme de réalisation les évolutions de la profondeur $z_i$ de l'interface 34 pendant ladite séquence d'essai.

Les variations calculées de pressions et/ou débits en tête de puits peuvent alors être également calculées.

La comparaison des évolutions des grandeurs mesurées et simulées peut donc s'effectuer indifféremment sur des pressions ou des débits, pour identifier un jeu de valeurs optimal pour les paramètres physiques de la formation géologique 13.

D'autre part, les procédés décrits mettent en oeuvre des séquences de perturbations de l'équilibre hydraulique du puits 10 à des profondeurs d'interfaces prédéterminées et sensiblement constantes pendant chaque séquence. Le procédé peut cependant être également mis en oeuvre si ces séquences de perturbations de l'équilibre hydraulique du puits 10 sont effectuées de manière simultanée à un déplacement continu de l'interface 34 entre deux profondeurs de l'interface. L'interface 34 peut notamment être déplacée un nombre de fois quelconque entre deux profondeurs. Ces séquences de balayage de l'interface 34 vers le fond du puits 11b, puis vers le sabot 16 constituant elles-mêmes chacune au moins une perturbation de l'équilibre hydraulique du puits 10. Les évolutions mesurées des grandeurs relatives à des propriétés des fluides comparées aux évolutions des mêmes grandeurs simulées permettent alors d'identifier un jeu de valeur optimal pour les paramètres physiques de la formation géologique.

La description précédente décrit des formes de réalisation du procédé avec une seule interface 34 entre deux liquides, mais deux ou une pluralité d'interfaces entre des liquides peut être utilisée pour mettre en oeuvre le procédé.

De même, tout fluide liquide ou gazeux peut être également utilisé à la place d'un des liquides de cette description.

## Revendications

**1.** Procédé d'estimation de paramètres physiques d'une formation géologique (13), lesdits paramètres physiques étant choisis parmi la perméabilité ($K^i$), la porosité ($\phi^i$) et la pression naturelle d'au moins une couche de la formation géologique, et comprenant les étapes suivantes:

- équiper un puits (10) traversant la formation géologique d'un tube (17) ouvert à son extrémité inférieure;
- remplir le tube et une partie inférieure d'un espace annulaire (19) situé autour du tube dans le puits avec un premier fluide ($L_2$);
- remplir le reste de l'espace annulaire avec au moins un deuxième fluide ($L_1$) de façon que les fluides présentent une interface (34) dans l'espace annulaire;
- perturber un équilibre hydraulique des fluides dans le puits (10);
- mesurer l'évolution de grandeurs relatives à des propriétés des fluides dans le puits (10), lesdites grandeurs comprenant au moins une pression à l'intérieur du tube (17) et une pression dans l'espace annulaire (19) ;
- effectuer des simulations par ordinateur du comportement hydraulique des fluides ayant un équilibre perturbé dans le puits, chaque simulation utilisant un jeu de valeurs pour lesdits paramètres physiques de la formation géologique et donnant lieu à une évolution simulée desdites grandeurs; et
- comparer les évolutions mesurées et simulées desdites grandeurs pour identifier un jeu de valeurs optimal pour lesdits paramètres physiques de la formation géologique.

**2.** Procédé selon la revendication 1, dans lequel ladite interface (34) est successivement positionnée à différentes profondeurs en ajustant les quantités des premier et second fluides dans le puits, et pour chaque profondeur on perturbe l'équilibre des fluides et on mesure l'évolution des grandeurs.

**3.** Procédé selon la revendication 1, dans lequel ladite interface (34) est déplacée entre au moins deux profondeurs en ajustant les quantités des premier et second fluides dans le puits, et pendant le déplacement de l'interface on perturbe l'équilibre des fluides et on mesure l'évolution des grandeurs.

**4.** Procédé selon l'une quelconque des revendications précédentes, dans lequel l'équilibre hydraulique du puits est perturbé en injectant ou soutirant un volume prédéterminé de fluide dans le tube (17) et/ou dans l'espace annulaire.

**5.** Procédé selon l'une quelconque des revendications précédentes, dans lequel chaque simulation comporte une estimation des débits de perméation des fluides vers la formation géologique (13) , puis une estimation de l'évolution simulée desdites grandeurs relatives à des propriétés des fluides dans le puits.

**6.** Procédé selon la revendication 5, dans lequel chaque simulation comporte en outre une estimation de la profondeur de ladite interface (34) dans l'espace annulaire (19) à partir des débits de perméation estimés.

**7.** Procédé selon l'une quelconque des revendications précédentes, dans lequel les premier et deuxième fluides ($L_1$, $L_2$) sont des liquides.

**8.** Procédé selon l'une quelconque des revendications précédentes, dans lequel le premier fluide ($L_2$) est plus dense que le deuxième fluide ($L_1$).

**9.** Procédé selon l'une quelconque des revendications précédentes, dans lequel lesdites grandeurs relatives à des propriétés des fluides dans le puits comprennent la profondeur de ladite interface (34) le long de l'espace annulaire (19).

**10.** Procédé selon l'une quelconque des revendications précédentes, dans lequel lesdites grandeurs relatives à des propriétés des fluides dans le puits (10) comprennent un débit d'injection ou de soutirage de fluide en tête de puits.

**11.** Procédé selon l'une quelconque des revendications précédentes, dans lequel le puits (10) est équipé en outre d'un asservissement d'une des grandeurs relative à des propriétés de fluides.

**12.** Procédé selon l'une quelconque des revendications précédentes, dans lequel on exécute successivement des séquences de mesure, chaque séquence de mesure comprenant:

  • positionnement de ladite interface (34) à une profondeur déterminée pour ladite séquence en ajustant les quantités des premier et second fluides dans le puits;
  • perturbation d'un équilibre hydraulique des fluides dans le puits en injectant ou soutirant un volume prédéterminé de fluide dans le tube et/ou dans l'espace annulaire.

**13.** Procédé selon l'une quelconque des revendications précédentes, dans lequel lesdites pressions ( $P_{tub}^{wh}$ , $P_{ann}^{wh}$ ) sont mesurées en tête de puits.

**14.** Procédé selon la revendication 13, dans lequel l'une desdites pressions est considérée comme une pression de référence, et dans lequel chaque séquence de mesure comprend au moins les étapes suivantes :

  (a1) déplacer l'interface (34) dans le puits (10) jusqu'à une position prédéterminée,
  (a2) perturber un équilibre des fluides du puits en injectant un premier volume de fluide, la pression de référence variant d'une valeur de pression initiale à une valeur de pression finale,
  (a3) observer les variations desdites pressions, et
  (a4) ramener à l'équilibre les fluides du puits en soutirant un deuxième volume de fluide, la pression de référence variant jusqu'à sensiblement la valeur de pression initiale.

**15.** Procédé selon la revendication 14, dans lequel à l'étape (a1), ladite interface (34) est positionnée à une profondeur ($z_{n+1}$) différente d'une séquence de mesure à une autre.

**16.** Procédé selon la revendication 15, dans lequel la formation géologique (13) comporte plusieurs couches ($C_1$-$C_N$) traversées par le puits, et dans lequel à l'étape (a1), ladite interface (34) est positionnée en regard d'une couche de matériaux différente d'une séquence de mesure à une autre.

**Claims**

1. Method of estimating physical parameters of a geological formation (13), said physical parameters being chosen among the permeability ($K^i$), the porosity ($\phi_i$) and the natural pressure of at least one layer of materials of the geological formation, and comprising the following steps:

- equipping a well (10) passing through the geological formation with a tube (17) open at its bottom end;
- filling the tube and a bottom part of an annular space (19) situated around the tube in the well with a first fluid ($L_2$);
- filling the rest of the annular space with at least one second fluid ($L_1$) so that the fluids exhibit an interface (34) in the annular space;
- disturbing a hydraulic balance of the fluids in the well (10);
- measuring the trend of quantities relating to properties of the fluids in the well (10), said quantities relating to properties of the fluids in the well comprising at least a pressure inside the tube (17) and a pressure in the annular space (19);
- performing computer simulations of the hydraulic behaviour of the fluids having a disturbed balance in the well, each simulation using a set of values for said physical parameters of the geological formation and giving rise to a simulated trend of said quantities; and
- comparing the measured and simulated trends of said quantities to identify an optimum set of values for said physical parameters of the geological formation.

2. Method according to Claim 1, in which said interface (34) is successively positioned at different depths by adjusting the amount of the first and second fluids in the well, and, for each depth, the balance of the fluids is disturbed and the trend of the quantities is measured.

3. Method according to Claim 1, in which said interface (34) is displaced between at least two depths by adjusting the amount of the first and second fluids in the well, and, while the interface is being displaced, the balance of the fluids is disturbed and the trend of the quantities is measured.

4. Method according to any one of the preceding claims, in which the hydraulic balance of the well is disturbed by injecting or subtracting a predetermined volume of fluid in the tube (17) and/or in the annular space.

5. Method according to any one of the preceding claims, in which each simulation comprises an estimation of the permeation flow rates of the fluids towards the geological formation (13), then an estimation of the simulated trend of said quantities relating to properties of the fluids in the well.

6. Method according to Claim 5, in which each simulation also comprises an estimation of the depth of said interface (34) in the annular space (19) based on estimated permeation flow rates.

7. Method according to any one of the preceding claims, in which the first and second fluids ($L_1$, $L_2$) are liquids.

8. Method according to any one of the preceding claims, in which the first fluid ($L_2$) is denser than the second fluid ($L_1$).

9. Method according to any one of the preceding claims, in which said quantities relating to properties of the fluids in the well comprise the depth of said interface (34) along the annular space (19).

10. Method according to any one of the preceding claims, in which said quantities relating to properties of the fluids in the well (10) comprise a flow rate of injection or removal of fluid at the well head.

11. Method according to any one of the preceding claims, in which the well (10) is also fitted with a servo-control for one of the quantities relating to fluid properties.

12. Method according to any one of the preceding claims, in which the measurement sequences are executed in succession, each measurement sequence comprising:

• positioning said interface (34) at a determined depth for said sequence by adjusting the amount of the first and second fluids in the well;
• disturbing a hydraulic balance of the fluids in the well by injecting or subtracting a predetermined volume of fluid in the tube and/or in the annular space.

**13.** Method according to any one of the preceding claims, in which said pressures ($P_{tub}$, $P_{ann}$) are measured at the well head.

**14.** Method according to Claim 13, in which one of said pressures is considered to be a reference pressure, and in which each measurement sequence comprises at least the following steps:

(a1) displacing the interface (34) in the well (10) to a predetermined position,
(a2) disturbing a balance of the fluids of the well by injecting a first volume of fluid, the reference pressure varying from an initial pressure value to a final pressure value,
(a3) observing the variations of said pressures, and
(a4) returning the fluids of the well to balance by subtracting a second volume of fluid, the reference pressure varying to roughly the initial pressure value.

**15.** Method according to Claim 14, in which, in the step (a1), said interface (34) is positioned at a depth ($z_{n+1}$) that is different from one measurement sequence to another.

**16.** Method according to Claim 15, in which the geological formation (13) comprises several layers ($C_1$-$C_N$) passed through by the well, and in which, in the step (a1), said interface (34) is positioned facing a different layer of materials from one measurement sequence to another.


**Patentansprüche**

**1.** Verfahren zur Schätzung physikalischer Parameter einer geologischen Formation (13), wobei die physikalischen Parameter aus der Durchlässigkeit ($K^i$), der Porosität ($\phi^i$) und dem natürlichen Druck mindestens einer Schicht der geologischen Formation ausgewählt werden, und das die folgenden Schritte enthält:

- Ausstatten eines die geologische Formation durchquerenden Brunnenschachts (10) mit einem an seinem unteren Ende offenen Rohr (17);
- Füllen des Rohrs und eines unteren Bereichs eines ringförmigen Raums (19), der sich im Schacht um das Rohr herum befindet, mit einem ersten Fluid ($L_2$);
- Füllen des Rests des ringförmigen Raums mit mindestens einem zweiten Fluid ($L_1$) derart, dass die Fluide eine Grenzfläche (34) im ringförmigen Raum haben;
- Stören eines hydraulischen Gleichgewichts der Fluide im Schacht (10);
- Messen der Entwicklung von Größen bezüglich von Eigenschaften der Fluide im Schacht (10), wobei die Größen mindestens einen Druck im Inneren des Rohrs (17) und einen Druck im ringförmigen Raum (19) umfassen;
- Durchführen von Computersimulationen des hydraulischen Verhaltens der Fluide, die ein gestörtes Gleichgewicht im Schacht haben, wobei jede Simulation einen Satz von Werten für die physikalischen Parameter der geologischen Formation verwendet und zu einer simulierten Entwicklung der besagten Größen führt; und
- Vergleich der gemessenen und simulierten Entwicklungen der Größen, um einen optimalen Satz von Werten für die physikalischen Parameter der geologischen Formation zu bestimmen.

**2.** Verfahren nach Anspruch 1, bei dem die Grenzfläche (34) nacheinander auf verschiedenen Tiefen positioniert wird, indem die Mengen der ersten und zweiten Fluide im Schacht angepasst werden, und für jede Tiefe das Gleichgewicht der Fluide gestört und die Entwicklung der Größen gemessen wird.

**3.** Verfahren nach Anspruch 1, bei dem die Grenzfläche (34) zwischen mindestens zwei Tiefen verschoben wird, indem die Mengen der ersten und zweiten Fluide im Schacht angepasst werden, und während der Verschiebung der Grenzfläche das Gleichgewicht der Fluide gestört und die Entwicklung der Größen gemessen wird.

**4.** Verfahren nach einem der vorhergehenden Ansprüche, bei dem das hydraulische Gleichgewicht des Schachts gestört wird, indem ein vorbestimmtes Fluidvolumen in das Rohr (17) und/oder den ringförmigen Raum eingespeist oder daraus abgezogen wird.

**5.** Verfahren nach einem der vorhergehenden Ansprüche, bei dem jede Simulation eine Schätzung der Permeationsdurchsätze der Fluide in die geologische Formation (13) und dann eine Schätzung der simulierten Entwicklung der Größen bezüglich Eigenschaften der Fluide im Schacht aufweist.

6. Verfahren nach Anspruch 5, bei dem jede Simulation außerdem eine Schätzung der Tiefe der Grenzfläche (34) im ringförmigen Raum (19) ausgehend von den geschätzten Permeationsdurchsätzen aufweist.

7. Verfahren nach einem der vorhergehenden Ansprüche, bei dem das erste und das zweite Fluid ($L_1$, $L_2$) Flüssigkeiten sind.

8. Verfahren nach einem der vorhergehenden Ansprüche, bei dem das erste Fluid ($L_2$) dichter ist als das zweite Fluid ($L_1$).

9. Verfahren nach einem der vorhergehenden Ansprüche, bei dem die Größen bezüglich von Eigenschaften der Fluide im Schacht die Tiefe der Grenzfläche (34) entlang des ringförmigen Raums (19) enthalten.

10. Verfahren nach einem der vorhergehenden Ansprüche, bei dem die Größen bezüglich von Eigenschaften der Fluide im Schacht (10) einen Einspeise- oder Abzugsdurchsatz von Fluid am Schachtkopf enthalten.

11. Verfahren nach einem der vorhergehenden Ansprüche, bei dem der Schacht (10) außerdem mit einer Regelung einer der Größen bezüglich von Fluideigenschaften ausgestattet ist.

12. Verfahren nach einem der vorhergehenden Ansprüche, bei dem nacheinander Messsequenzen durchgeführt werden, wobei jede Messsequenz enthält:

• Positionieren der Grenzfläche (34) auf einer für die Sequenz bestimmten Tiefe durch Anpassen der Mengen der ersten und zweite Fluide im Schacht;
• Stören eines hydraulischen Gleichgewichts der Fluide im Schacht durch Einspeisen oder Abziehen eines vorbestimmten Fluidvolumens im Rohr und/oder im ringförmigen Raum.

13. Verfahren nach einem der vorhergehenden Ansprüche, bei dem die Drücke ( $p_{tub}^{wh}$ , $p_{ann}^{wh}$ ) am Schachtkopf gemessen werden.

14. Verfahren nach Anspruch 13, bei dem einer der Drücke als ein Bezugsdruck angesehen wird, und bei dem jede Messsequenz mindestens die folgenden Schritte enthält:

(a1) Verschieben der Grenzfläche (34) im Schacht (10) bis zu einer vorbestimmten Position,
(a2) Stören eines Gleichgewichts der Fluide des Schachts durch Einspeisen eines ersten Fluidvolumens, wobei der Bezugsdruck von einem Anfangsdruckwert bis zu einem Enddruckwert variiert,
(a3) Beobachten der Variationen der Drücke, und
(a4) Rückführen der Fluide des Schachts auf ein Gleichgewicht durch Abziehen eines zweiten Fluidvolumens, wobei der Bezugsdruck bis zu etwa dem Anfangsdruckwert variiert.

15. Verfahren nach Anspruch 14, bei dem im Schritt (a1) die Grenzfläche (34) auf einer Tiefe ($z_{n+1}$) positioniert wird, die sich von einer Messsequenz zur anderen unterscheidet.

16. Verfahren nach Anspruch 15, bei dem die geologische Formation (13) mehrere Schichten ($C_1$-$C_N$) aufweist, die von dem Schacht durchquert werden, und bei dem im Schritt (a1) die Grenzfläche (34) vor einer Schicht aus Materialien positioniert wird, die von einer Messsequenz zur anderen verschieden ist.

# FIG.1.

FIG.2a.

FIG.2b.

FIG.3.

FIG.4.

$P_{ref}$

$P_c$

$D'$

$D''$

$t$

FIG.5a.

$Q_{ref}$

$Q_f$

$Q_i$

$D'$

$D''$

$t$

FIG.5b.

$Z$

$Z_2$
$Z_{n+1}$
$Z_n$

$Z_{n-1}$

$Z_1$

$a_1$   $a_2$   $a_3$   $a_4$

$t$

FIG.5c.

**EP 2 120 068 B1**

**RÉFÉRENCES CITÉES DANS LA DESCRIPTION**

**Documents brevets cités dans la description**

- FR 2747470 A